Europäisches Patentamt

European Patent Office

Office européen des brevets

(11) Publication number: **0 096 980**
**A1**

# EUROPEAN PATENT APPLICATION

(21) Application number: **83302914.3**

(22) Date of filing: **20.05.83**

(51) Int. Cl.³: **F 16 H 47/06**

(30) Priority: **16.06.82 US 388871**

(43) Date of publication of application: **28.12.83**
**Bulletin 83/52**

(84) Designated Contracting States: **DE FR GB IT NL**

(71) Applicant: **BORG-WARNER CORPORATION, 200 South Michigan Avenue, Chicago Illinois 60604 (US)**

(72) Inventor: **Wayman, Robert William, 22506 Tiermas, Mission Viejo California 92691 (US)**

(74) Representative: **Williams, Trevor John et al, J.A. KEMP & CO. 14 South Square Gray's Inn, London WC1R 5EU (GB)**

(54) Continuously variable transmission with continuously running belt and hydrodynamic drive.

(57) A continuously variable transmission (10) includes a belt/pulley assembly (18) driven by a prime mover, a two-element fluid coupling (20) driven by the belt/pulley assembly, a forward and reverse gear assembly (22) driven by the fluid coupling, and a final drive assembly (14) driven by the gear assembly and driving a load. The belt/pulley assembly includes a continuously running belt (62), and the fluid coupling isolates the belt from drive line shocks and vibrations.

Fig. 1

# CONTINUOUSLY VARIABLE TRANSMISSION WITH
## CONTINOUSLY RUNNING BELT AND
### HYDRODYNAMIC DRIVE

## Description

This invention relates generally to a continuously variable transmission (CVT). More particularly, it relates to a CVT which incorporates a continuously running belt and a hydrodynamic drive. The transmission arrangement is such as to substantially eliminate the requirements for a torsional vibration damper and a lock-up clutch. Such a CVT is adapted for use, for example, in a front-wheel-drive automotive vehicle.

The typical automotive transmission is shifted in finite steps between a high-torque, low-speed mode for starting a vehicle and a high-speed, low-torque mode for vehicle operation at highway speeds. In a manual transmission, shifting is accomplished by the selection and engagement of gear sets. In an automatic transmission, shifting is accomplished by the controlled engagement and release of friction elements. Because such shifting is in step functions, the most efficient vehicle operation can only be approximated. Efficiency would be improved by the provision of a transmission in which the drive ratio could be varied in a regular, continuous manner as the vehicle is started and accelerated to highway speeds.

Considerable work has been directed to the application of a CVT to the drive line of an automotive vehicle. An example of such a CVT is disclosed in U.S. Application 115,825 filed January 28, 1980 and of common assignee herewith. That application discloses a hydrodynamic device driven by an engine and in turn driving a vehicle through a belt/pulley assembly. A disadvantage of such an arrangement is that the belt does not run continuously, and thus may not be fully down-shifted when the vehicle comes to a stop.

Other examples of such CVTs are disclosed in U.S. Patent 2,150,456 issued March 14, 1939, U.S. Patent 4,241,618 issued December 30, 1980 and U.S. Application 257,283 filed April 24, 1981, which application is of common assignee herewith. A common feature of these CVTs is the provision of a belt/pulley assembly driven directly by an engine and having a continuously running belt. The belt/pulley assembly in turn drives through clutching and gearing assemblies to transfer torque to the vehicle drive axle. A disadvantage of such arrangements is that the belt/pulley assemblies are subjected to shocks and vibrations transmitted back through the drive line. There is a need in the art for a CVT incorporating a continuously running belt which is protected from such shocks and vibrations.

Another disadvantage of such arrangements is that generally they do not provide adequate reduction ratios in forward and reverse. Thus, there is a need in the art for a CVT which incorporates a continuously running belt and additional selectively engageable gearing which will augment the belt/pulley assembly in both forward and reverse.

The primary object of this invention is to meet the needs noted above.  To that end, there is provided a CVT in which a belt/pulley assembly includes a belt which runs continously when an associated engine is running. The belt/pulley assembly drives a hydrodynamic device which in turn drives selectively engageable gearing and the final drive of an associated vehicle.

The belt/pulley assembly includes an input pulley directly driven by the engine.  A belt couples the input pulley with an output pulley which drives a two-element fluid coupling.  The fluid coupling in turn drives through a forward and reverse gear assembly to the vehicle final drive.  The gear assembly includes a reverse gear set which provides a reduction ratio and a forward gear set which provides either a reduction ratio or direct drive.  Friction elements are fluid actuated to selectively engage these ratios.

The objects and advantages of this invention will become apparent to those skilled in the art upon careful consideration of the specification herein, including the drawings, wherein:

Figure 1 is a schematic illustration of the preferred embodiment of the invention;

Figure 2 is generally an outline view, partially in section, of the preferred embodiment of the invention;

Figure 3 is a sectional view showing details of the preferred embodiment of the invention; and

Figure 4 is a schematic illustration of an alternative embodiment of the invention.

While this invention is susceptible of embodiment in many different forms, the preferred embodiment and an alternative embodiment will be shown in the drawings and described in detail. It should be understood that the present disclosure is considered to be an exemplication of the principles of the invention, and is not intended to limit the invention to these embodiments.

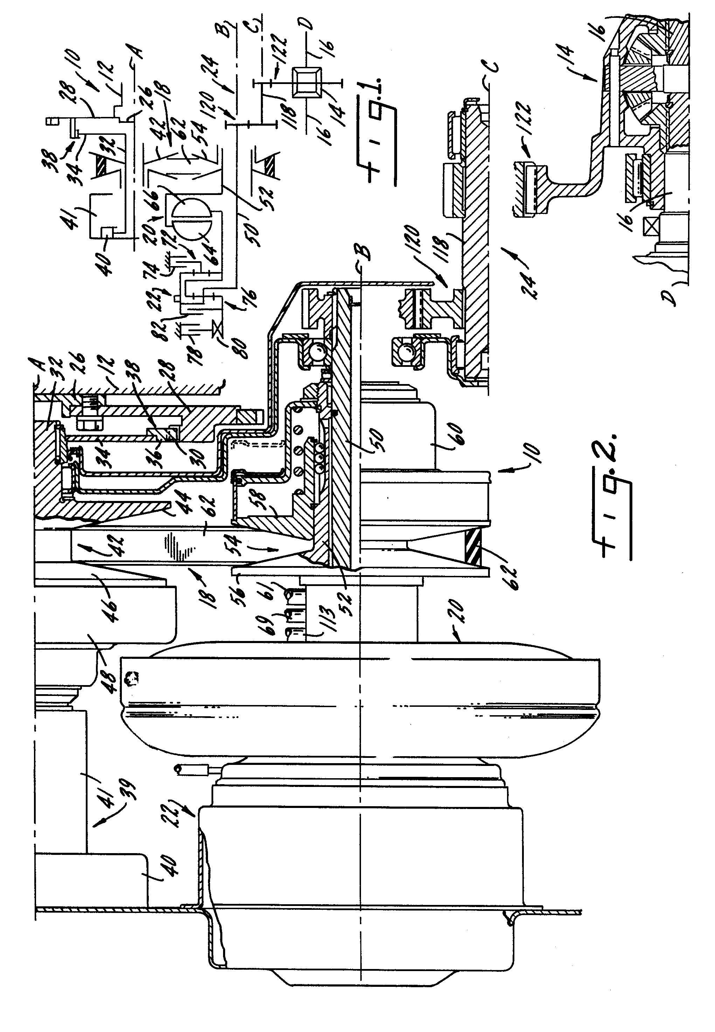

Referring to Figures 1, 2 and 3 of the drawings in greater detail, a CVT 10 is adapted to be driven directly by a prime mover 12 which may be the engine of an associated automotive vehicle. CVT 10 is adapted to drive through a differential 14 to a load 16 which may be a pair of vehicle axle shafts.

CVT 10 includes a belt/pulley assembly 18 which is continuously variable between predetermined limits. Belt/pulley assembly 18 directly drives a hydrodynamic device 20 which may be a two-element fluid coupling. Hydrodynamic device 20 drives through a forward and reverse gear assembly 22, or the like, to a final drive assembly 24 which in turn drives differential 14.

Engine 12 includes a crank shaft 26 rotatable about a first axis A. A flywheel 28 is secured to crank shaft 26 and defines inwardly facing teeth 30.

CVT 10 includes a first, input shaft 32 rotatable

081025-TEG -5- 0096980

about axis A. Extending outwardly from shaft 32 is a drive plate 34 which defines outwardly facing teeth 36 engaged with teeth 30 of flywheel 28. Teeth 30 and 36 together define a toothed coupling 38 by means of which CVT 10 may be simply and easily engaged with engine 12 during installation.

Within a suitable housing 39 is a pump 40 driven by shaft 32. In the preferred form of the invention, this may be a variable volume vane pump. Also within housing 39 is suitable fluid control means 41.

Belt/pulley assembly 18 includes a variable input pulley 42 rotatable with shaft 32. Pulley 42 includes a fixed flange 44 and a slidable flange 46. Suitable fluid controlled actuating means 48 is provided for sliding flange 46 toward and away from flange 44.

A second, intermediate shaft 50 is rotatable about a second axis B. A quill 52 is journalled on shaft 50 for rotation about axis B.

Belt/pulley assembly 18 also includes a variable output pulley 54 rotatable with quill 52. Pulley 54 includes a fixed flange 56 and a slidable flange 58. Suitable fluid controlled actuating means 60 is provided for sliding flange 58 toward and away from flange 56. A line 61 provides fluid pressure for actuating means 60.

Belt/pulley assembly 18 further includes a belt 62 coupling input pulley 42 with output pulley 54. By way of example, one suitable belt is disclosed in U.S Patent 4,080,841 issued March 28, 1978.

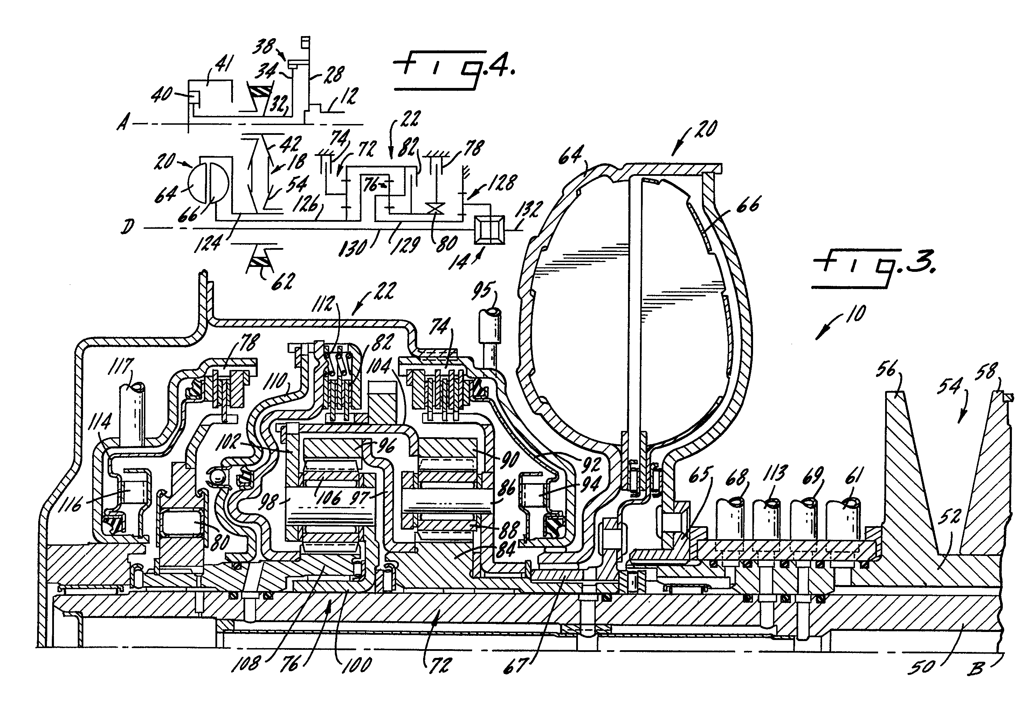

As shown in Figure 2, belt/pulley assembly 18 is in the high-torque, low-speed mode. In this mode the maximum reduction ratio is approximately 2.3. Assembly 18 is continuously variable between this maximum reduction ratio and the high-speed, low-torque mode having a maximum overdrive ratio of approximately 2.2. Thus, the ratio range of assembly 18 is approximately 5. In the preferred form of the invention, fluid control means 41 and actuating means 48 and 60 shift assembly 18 to the high-torque, low-speed mode when the associated vehicle comes to a stop. This down-shifting is effected quickly and smoothly even though the vehicle is at rest due to the fact that belt 62 runs continuously when engine 12 is running. This feature is particularly important where the vehicle is brought to a panic stop and then immediately started again.

With particular reference to Figure 3, hydrodynamic device 20 includes an impeller 64 connected to a collar 65 splined to quill 52. Device 20 also includes a turbine 66 connected to a collar 67. A line 68 provides charge oil for device 20, and a line 69 receives discharge oil therefrom.

In the preferred form of the invention, device 20 is a two-element fluid coupling driven directly by belt/ pulley assembly 18. In an automotive environment, assembly 18 runs for the most part in overdrive, with the resulting slip of the fluid coupling being relatively low (within approximately 1% to 2%). Thus, the fluid coupling should be more efficient than a torque converter.

Because the slip of the fluid coupling is low, a lock-up clutch is not provided. This is an important feature, as the fluid coupling, interposed between belt/pulley assembly 18 and gear assembly 22, thus isolates belt 62 from drive line shocks and vibrations.

Forward and reverse gear assembly 22 includes a reverse gear set 72 engageable by a friction-engaging reverse brake 74 to establish a low range with a reduction ratio of approximately 1.5. Gear assembly 22 also includes a two-speed forward gear set 76. Gear set 76 may be engaged by a friction-engaging forward brake 78 and a one-way clutch 80 to establish a low range with a reduction ratio of approximately 1.5. Gear set 76 may be engaged by a friction-engaging forward clutch 82 to establish a high range providing direct drive.

Reverse gear set 72 is of the simple planetary type and includes an input sun gear 84 journalled on shaft 50 and in engagement with collar 67. A carrier 86 is grounded upon engagement of brake 74, and is free to rotate upon release of brake 74. A plurality of planet gears 88 is supported by carrier 86 in mesh with sun gear 84 and with an output ring gear 90.

A fluid-actuated piston 92 is slidable to engage brake 74. A spring 94 provides a biasing force on piston 92 tending to disengage brake 74. A line 95 provides fluid pressure for actuating piston 92. Upon relief of this pressure, spring 94 disengages brake 74.

Forward gear set 76 is of the simple planetary type and includes an input ring gear 96 secured by an arm 97 to sun gear 84 of gear set 72.  Forward gear set 76 also includes an output carrier 98 secured by an arm 100 to shaft 50, and by arms 102 and 104 to ring gear 90 of gear set 72.  A plurality of planet gears 106 is supported by carrier 98 in mesh with ring gear 96 and a sun gear 108 journalled on shaft 50.

A fluid-actuated piston 110 is slidable to engage clutch 82, thereby locking carrier 98 to sun gear 108.  A series of springs 112 biases forward clutch 82 toward disengagement.  A line 113 provides fluid pressure for actuating piston 110.  Upon relief of pressure in line 113, springs 112 disengage clutch 82.

Forward brake 78 is connected by one-way clutch 80 to sun gear 108.  A fluid-actuated piston 114 is slidable to engage brake 78.  A spring 116 provides a biasing force on piston 114 tending to disengage brake 78.  A line 117 provides fluid pressure for actuating piston 114.  Upon relief of this pressure, spring 116 disengages brake 78.

For reverse operation, fluid pressure is directed to line 95 so as to actuate piston 92.  This engages reverse brake 74, thereby grounding carrier 86.  Torque is directed from fluid coupling 20 to input sun gear 84, and from output ring gear 90 through carrier 98 of gear set 76 to shaft 50 at a reduction ratio of approximately 1.5. Relief of fluid pressure in line 95 allows spring 94 to disengage brake 74.

Low-range forward operation is effected by directing fluid pressure to line 117 so as to actuate piston 114. This engages forward brake 78, thereby grounding sun gear 108 through one-way clutch 80. Torque is directed from fluid coupling 20 through sun gear 84 of gear set 72 to input ring gear 96, and from output carrier 98 to shaft 50 at a reduction ratio of approximately 1.5. Relief of fluid pressure in line 117 allows spring 116 to disengage brake 78.

For high-range forward operation, brake 78 remains engaged and fluid pressure is directed to line 113 so as to actuate piston 110. This engages forward clutch 82, thereby locking carrier 98 to sun gear 108. Gear set 76 rotates as an integral unit, up-shifting as it overruns one-way clutch 80. Torque is directed from fluid coupling 20 through sun gear 84 of gear set 72 and through gear set 76 to shaft 50. Relief of fluid pressure in line 113 allows springs 112 to disengage clutch 82, thereby down-shifting gear set 76 from direct drive to reduction ratio drive in the forward direction.

With reference to Figures 1 and 2, final drive assembly 24 includes a transfer shaft 118 rotatable about a third axis C. Final drive reduction gear sets 120 and 122 transfer torque from shaft 50 to shaft 118, and from shaft 118 to differential 14. In the usual manner, differential 14 provides drive for rotation of axle shafts 16 about a fourth axis D.

From the foregoing it will be apparent that CVT 10 as disclosed herein provides a number of advantages over the prior art. No torsional vibration damper is required between engine 12 and CVT 10, although the provision of such a damper, if desired, would have no adverse effect on the operation of CVT 10.

Also, belt 62 runs continuously when engine 12 is running regardless of vehicle speed. Belt 62 runs in one direction, regardless of the direction of vehicle movement. Belt/pulley assembly 18 provides a ratio range of approximately 5, with variation between reduction and overdrive.

In addition, hydrodynamic device 20 in the form of a two-element fluid coupling runs efficiently with very low slip, and thus does not require a lock-up clutch. Hydrodynamic device 20 isolates belt/pulley assembly 18 from forward and reverse gear assembly 22, thereby protecting belt 62 from drive line shocks and vibrations.

Further, reverse gear set 72 provides reverse drive at a reduction ratio of approximately 1.5. Forward gear set 76 provides forward drive at either a reduction ratio of approximately 1.5 or in direct drive. Thus, gear assembly 22 augments belt/pulley assembly 18, effectively extending its range. Final drive assembly 24 provides additional fixed reduction ratio as may be necessary.

Referring to Figure 4 of the drawings in greater detail, an alternative embodiment of CVT 10 is disclosed wherein only axes A and D are required.

Output pulley 54 is rotatable with a quill 124 which replaces quill 52. Quill 124 is mounted for rotation about axis D.

Forward and reverse gear assembly 22 is moved from its position adjacent hydrodynamic device 20 to a position on the opposite side of belt/pulley assembly 18. Drive from device 20 to gear assembly 22 is provided by a quill 126 mounted for rotation about axis D.

A planetary gear set 128 replaces final drive assembly 24. A quill 129, mounted for rotation about axis D, provides drive from gear assembly 22 to planetary gear set 128.

A pair of shafts 130 and 132 are rotatable about axis D, and are engaged with axle shafts 16 (shown in Figure 2) to provide the drive from differential 14.

Thus, it will be seen that the preferred four-axis configuration of this invention may be modified to have a two-axis configuration if space constraints in the vehicle so dictate.

It will be apparent that the CVT disclosed herein is simple and relatively inexpensive. It may be designed both to operate efficiently and to allow an associated engine to run in its most efficient fuel range.

## CLAIMS

1. A continuously variable transmission (10) adapted to be driven by a prime mover (12) and adapted to drive a load (16); said transmission comprising a continuously variable belt/pulley assembly (18) including a variable input pulley (42) adapted for driven engagement with the prime mover, a variable output pulley (54), and a belt (62) coupling said pulleys, whereby said belt runs continuously when the prime mover is running; a hydrodynamic device (20) in driven engagement with said output pulley; and means (22-24-14) in driven engagement with said hydrodynamic device and adapted for driving engagement with the load, whereby said hydrodynamic device isolates said belt from said means.

2. The transmission of claim 1; wherein said hydrodynamic device includes an impeller (64) in driven engagement with said output pulley and a turbine (66) in driving engagement with said means.

3. The transmission of claim 2; wherein said hydrodynamic device is a two-element fluid coupling comprising said impeller and said turbine.

4. The transmission of claim 1, 2 or 3; wherein said means includes a forward and reverse gear assembly (22).

5. The transmission of claim 1, 2, or 3; wherein said means includes a forward and reverse gear assembly having a reverse gear set (72) engageable to provide reverse drive at a reduction ratio, and a two-speed forward gear set (76) selectively engageable to provide forward drive at a reduction ratio and in direct drive.

6. The transmission of claim 1, 2 or 3; further comprising toothed coupling means (38) for engaging said transmission with the prime mover.

7. A continuously variable transmission adapted to be driven by the engine of an automotive vehicle and adapted to drive a pair of vehicle axle shafts; said transmission comprising a first shaft rotatable about a first axis and adapted for direct driven engagement with the engine; a second shaft rotatable about a second axis; a continuously variable belt/pulley assembly including a variable input pulley mounted on said first shaft, a variable output pulley mounted on said second shaft, and a belt coupling said pulleys; a hydrodynamic device on said second axis, said hydrodynamic device including an impeller in driven engagement with said output pulley, and a turbine; a gear assembly on said second axis, said gear assembly being in driven engagement with said turbine; a third shaft rotatable about a third axis; a final drive assembly mounted on said second and third shafts; said final drive assembly being in driven engagement with said gear assembly; a differential on a fourth axis, said differential being in driven engagement with said final drive assembly and adapted for driving engagement with the axle shafts.

8. The transmission of claim 7; wherein said hydrodynamic device is a two-element fluid coupling comprising said impeller and said turbine.

9.    The transmission of claim 7 or 8; wherein said gear assembly includes a reverse gear set engageable to provide reverse drive at a reduction ratio, and a two-speed forward gear set selectively engageable to provide forward drive at a reduction ratio and in direct drive.

10.    The transmission of claim 7, 8 or 9; further comprising toothed coupling means for engaging said transmission with the engine.

11.    A continuously variable transmission adapted to be driven by the engine of an automotive vehicle and adapted to drive a pair of vehicle axle shafts; said transmission comprising a first shaft rotatable about a first axis and adapted for direct driven engagement with the engine; a second shaft rotatable about a second axis; a continuously variable belt/pulley assembly including a variable input pulley mounted on said first shaft, a variable output pulley mounted on said second shaft, and a belt coupling said pulleys; a hydrodynamic device on said second axis, said hydrodynamic device including an impeller in driven engagement with said output pulley, and a turbine; a gear assembly on said second axis, said gear assembly being in driven engagement with said turbine; a final drive assembly on said second axis, said final drive assembly being in driven engagement with said gear assembly; and a differential on said second axis, said differential being in driven engagement with said final drive assembly and adapted for driving engagement with the axle shafts.

081025-TEG                    -15-                    0096980

12. The transmission of claim 11; wherein said hydrodynamic device is a two-element fluid coupling comprising said impeller and said turbine.

13. The transmission of claim 11 or 12; wherein said gear assembly includes a reverse gear set engageable to provide reverse drive at a reduction ratio, and a two-speed forward gear set selectively engageable to provide forward drive at a reduction ratio and in direct drive.

14. The transmission of claim 11, 12 or 13; further comprising toothed coupling means for engaging said transmission with the engine.

15. A continuously variable transmission adapted to be driven by the engine of an automotive vehicle and adapted to drive the final drive assembly of the vehicle; said transmission comprising a first shaft adapted for direct driven engagement with the engine; a second shaft; a continuously variable belt/pulley assembly including a variable input pulley mounted on said first shaft, a variable output pulley mounted on said second shaft, and a belt coupling said pulleys, whereby said belt runs continuously when the engine is running; a hydrodynamic device including an impeller in driven engagement with said output pulley, and a turbine; and a gear assembly in driven engagement with said turbine, said gear assembly being adapted to drive the final drive assembly.

16.  The transmission of claim 15; wherein said hydrodynamic device is a two-element fluid coupling comprising said impeller and said turbine.

17.  The transmission of claim 15 or 16; wherein said gear assembly includes forward and reverse gear sets.

Fig.1.

Fig.2.

Fig.4.

Fig.3.

0869600

## European Patent Office

# EUROPEAN SEARCH REPORT

Application number

| DOCUMENTS CONSIDERED TO BE RELEVANT | | EP 83302914.3 |
| --- | --- | --- |

| Category | Citation of document with indication, where appropriate, of relevant passages | Relevant to claim | CLASSIFICATION OF THE APPLICATION (Int. Cl. ³) |
| --- | --- | --- | --- |
| A | <u>DE - A1 - 2 947 658</u> (P.I.V.) <br> * Totality * <br> -- | 1,4,5, 7,9,11, 13,15, 17 | F 16 H 47/06 |
| A | <u>DE - A1 - 2 948 195</u> (P.I.V.) <br> * Totality * <br> -- | 1,3-5, 7-9,11- 13,15- 17 | |
| A | <u>DE - A1 - 3 040 944</u> (AISIN-WARNER K.K.) <br> * Totality * <br> -- | 1,4,5, 7,9,11, 13,15, 17 | |
| A | <u>FR - A1 - 2 465 131</u> (BORG-WARNER LTD.) <br> * Totality * <br> -- | 1,4,5, 7,9,11, 13,15, 17 | |
| A,D | <u>US - A - 2 150 456</u> (PERRINE) <br> * Totality * <br> -- | 1,4,5, 7,9,11, 13,15, 17 | TECHNICAL FIELDS SEARCHED (Int. Cl. ³) <br><br> F 16 H 9/00 |
| A | <u>US - A - 4 125 037</u> (PALMER et al.) <br> * Totality * <br> -- | 1,4,5, 7,9,11, 13,15, 17 | F 16 H 47/00 <br> F 16 H 55/00 |
| A,D | <u>US - A - 4 241 618</u> (SMIRL) <br> * Totality * <br> -- | 1,4,5, 7,9,11, 13,15, 17 | |
| A | <u>DE - B2 - 2 364 541</u> (Z.F.) <br> * Totality * <br> ---- | 6,10,14 | |

The present search report has been drawn up for all claims

| Place of search | Date of completion of the search | Examiner |
| --- | --- | --- |
| VIENNA | 29-08-1983 | SCHATEK |